Europäisches Patentamt

European Patent Office

Office européen des brevets

(19)

(11) Publication number: **0 127 780 B1**

## (12) EUROPEAN PATENT SPECIFICATION

(45) Date of publication of patent specification: **11.09.91**

(51) Int. Cl.⁵: **B25G 1/10, B25G 3/34, B29C 45/00**

(21) Application number: **84104986.9**

(22) Date of filing: **03.05.84**

(54) **An improved implement and method of manufacture thereof.**

(30) Priority: **03.05.83 US 491245**
**08.03.84 US 587381**

(43) Date of publication of application:
**12.12.84 Bulletin 84/50**

(45) Publication of the grant of the patent:
**11.09.91 Bulletin 91/37**

(84) Designated Contracting States:
**AT BE CH DE FR GB IT LI LU NL SE**

(56) References cited:
**DE-A- 2 112 539      FR-A- 1 102 285**
**FR-A- 2 057 106      FR-A- 2 220 354**
**FR-A- 2 274 407      FR-A- 2 489 209**

(73) Proprietor: **Lifetime Tool Company, Inc.**
**1439 E. Eleven Mile Road**
**Madison Heights Michigan 48071(US)**

(72) Inventor: **Meredith, Jerry Richard**
**4870 Brownsville Road**
**Powder Springs Georgia 30070(US)**
Inventor: **Meredith, William Clayton, Jr.**
**4870 Brownsville Road**
**Powder Springs Georgia 30070(US)**

(74) Representative: **Patentanwälte Dr. Solf & Zapf**
**Zeppelinstrasse 53**
**W-8000 München 80(DE)**

## Description

### Technical Field

This invention relates generally to hand implements or tools and methods of manufacture thereof. More particularly, this invention relates to an improved implement including an injection molded thermoplastic handle and an implement head adapted to receive heated thermoplastic material injected under pressure. The interface between the adapted implement head and the thermoplastic handle material forms a bond joining the implement head and the thermoplastic handle.

### Background of the Invention

In the past, most implement handles have been manufactured from wood. The disadvantages of implements having wood handles ate that such handles are prone to splinter, deteriorate or break. Additionally, the implement head may either come loose or come off the wooden handle.

Additionally, attempts have been made to fabricate plastic implement handles. The difficulty with such plastic implement handles, however, is that the methods of attaching the implement head to the implement handle have either involved adhesives or some form of mechanical fastener, such as a bolt, a pin or screw. Such adhesive or mechanical methods of attachment are also subject to the same difficulties encountered in implements having wood handles in that the implement head is likely either to come loose or to come off the implement handle.

A hammer-shaped implement having a forged tool head on which a plastic handle is cast-on is described in the FR-A-2 274 407. The tool head has a first and second implement portion which are joined to one another by means of a web whose width and thickness are less than the width and thickness of the implement portions, whereby a wasp-shaped recess is formed in the tool head. The handle is cast on the tool head by means of the plastic material filled in the recess.

### Summary of the Invention

The invention disclosed herein is an improved implement which includes an injection molded thermoplastic handle and an implement head specially adapted to receive heated thermoplastic material injected under pressure and in which the interface between the adapted implement head and the thermoplastic material forms a bond joining the adapted implement head and the injection molded thermoplastic handle.

More particularly described, the improved implement of the present invention is manufactured by a process of injection-molding thermoplastic nylon material into a mold which has a first cavity portion sized to fit tightly about the working surfaces of the tool head so as to exclude molded thermoplastic material from the working surfaces, and a second cavity portion which receives a web portion of the tool head and allows the thermoplastic material to flow completely around the web portion of thetool head. Apertures hole are provided in the web portion of the tool head which allows the thermoplastic material on one side of the web portion of the tool head to intimately join with the thermoplastic material on the opposite side of the web portion of the tool head, to lock the tool head to the handle. Advantageously, therefore, there is provided a strengthened permanent unitary junction between the implement working head and the handle.

Generally, in the tools made in accordance with the present invention, the tool handle is attached to the head by molded portions integral with the handle and which extend completely about a web portion. The tools are molded by a process whereby a metal tool head is disposed in a mold cavity, where the mold cavity includes a mold cavity portion which fits closely about the working surface or ends of the tool head such as to exclude mold material from the working surfaces. A second mold cavity portion is also provided for receiving the web portion of the tool head, such that mold material can flow about and enclose or encapsulate the web portion. The second mold cavity portion is integral and communicates with a handle cavity portion such that the molded material, after injection and hardening, forms a handle integral with the portions molded about the web portion of the tool head, to attach the handle to the head.

Additionally, for some types of tools, there is provided a tool head having a web portion connected to a pair of adjacent opposed working end portions. The web portion is of less thickeness and width than the adjacent opposed end portions, to define together with the end portions a peripheral groove extending completely about the tool head. This groove is filled with mold material when the handle is formed.

For other types of tools, there is provided a tool head having a web portion connected to an adjacent working end portion. The web portion may include holes extending through the thickness of the web, and may include flanges extending outwardly away from the surface of the web portion.

Moreover, for tools such as hoes, rakes, shovels, and the like, the molded portions extending about the tool head web portion may be made larger than the corresponding dimensions of the web portion to define an integrally formed step or foot surface, such that a tool user can apply pressure to the tool during use by stepping on the step with his or her foot.

While the following specification and preferred embodiments are particularly directed toward hand held implements, it will be understood that the present invention relates to implements which may be attached to machinery and to other types of implements as well.

It is an object of this invention to provide a strong, durable injection molded implement handle.

Another object of this invention is to provide an adapted implement head structure and method of bonding an injection molded thermoplastic implement handle to an implement head such that the head will not come loose or come off the handle.

It is another object of the present invention to provide an implement handle which is lightweight in comparison to its strength and durability.

It is another object of this invention to provide an implement handle which will resist bending and twisting, but which can be made to have a broad range of flexibilities in keeping with the purpose for which the implement is to be used.

It is another object of the present invention to provide an implement handle which will not splinter and which will have the desired hardness and smoothness.

The foregoing objectives and advantages of the present invention, as well as additional objectives and advantages of the present invention, will be understood more fully by reading the following description of preferred embodiments of the present invention and by reviewing the attached drawings of preferred embodiments of the present invention, in which specification and drawings the parts shown in the drawing and the parts described in the specification are identified by like numbers.

Brief Description of the Drawings

Fig. 1 is a perspective view of a preferred embodiment of the present invention as applied to a single bladed axe.

Fig. 2 is a cross-sectional view of the single bladed axe head and handle taken along section 2-2 of Fig. 1 and showing the adapted structure of the axe head by which the axe head is bonded to the axe handle.

Fig. 3 is a side view of an adapted axe head for use in the preferred embodiment of the invention shown in Fig. 1.

Fig. 4 is a perspective view of a preferred embodiment of the present invention as used in a double-edged axe and axe handle.

Fig. 5 is a cross-sectional view taken along lines 5-5 of Fig. 4 and showing the adapted structure whereby the adapted double-edged axe head is bonded to the axe handle.

Fig. 6 is a side view of the adapted axe head and also an alternative metal stem as used in the preferred embodiment as shown in Fig. 4.

Fig. 7 is a perspective view of a preferred embodiment of the present invention as used in a sledge hammer.

Fig. 8 is a cross-section view taken along lines 8-8 of Fig. 7 showing the structure whereby the adapted sledge hammer head is bonded to the handle of the sledge hammer.

Fig. 9 is a perspective view of a preferred embodiment of the present invention as applied to a single head maul.

Fig. 10 is a cross-sectional view of the single head maul and handle taken along the line 10-10 of Fig. 9.

Fig. 11 shows a typical injection mold top half used to form the axe of Fig. 4.

Fig. 12 shows the mold of Fig. 11 after placement of a double edged axe head into the cavity of the mold.

Fig. 13 is a cross-sectional view taken along the line 13-13 of Fig. 12 illustrating the side mold cavities.

Detailed Description of Alternative Embodiments and Methods of Manufacture

It will be understood that the following description of alternative preferred embodiments is set forth solely for the purpose of enabling persons skilled in the art to make and use the present invention according to the inventors' preferred embodiments, and such description is not intended to limit or restrict the scope of the present invention in any way. The scope of the present invention is limited solely by reference to the appended claims.

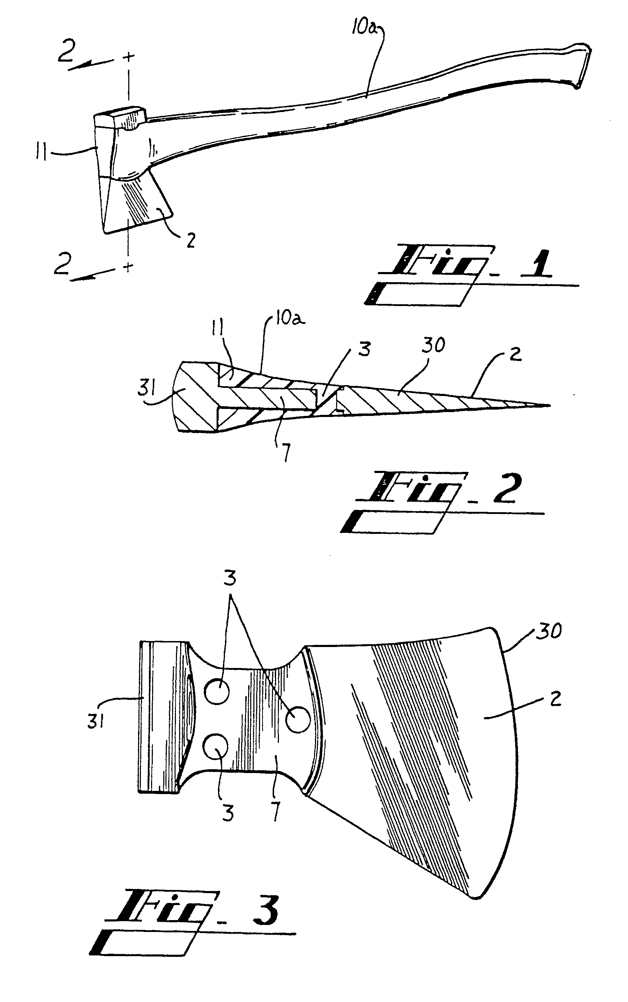

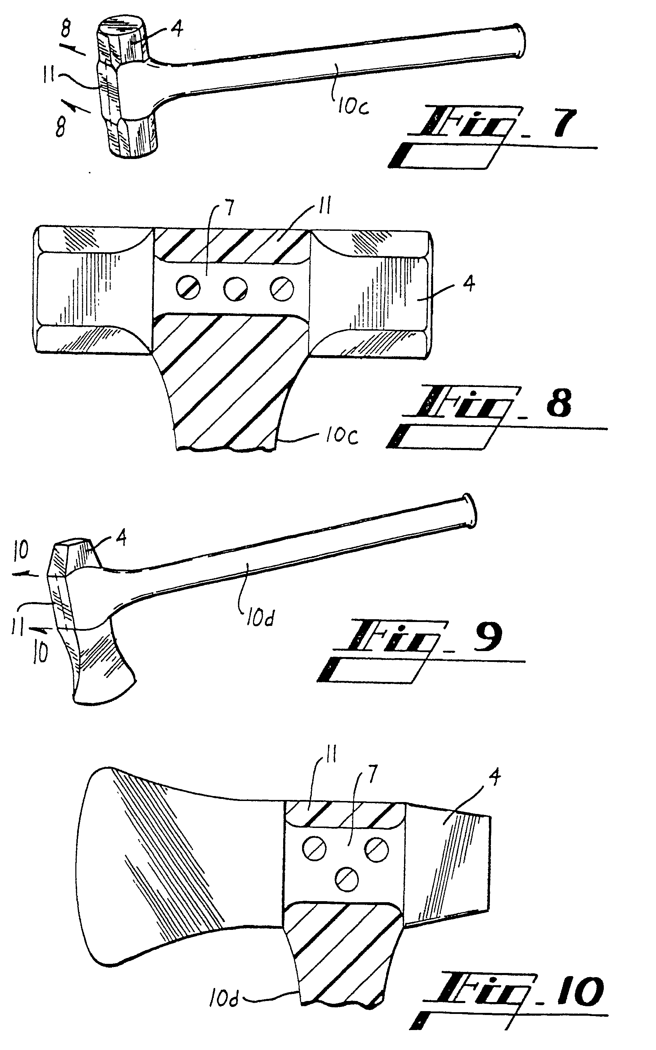

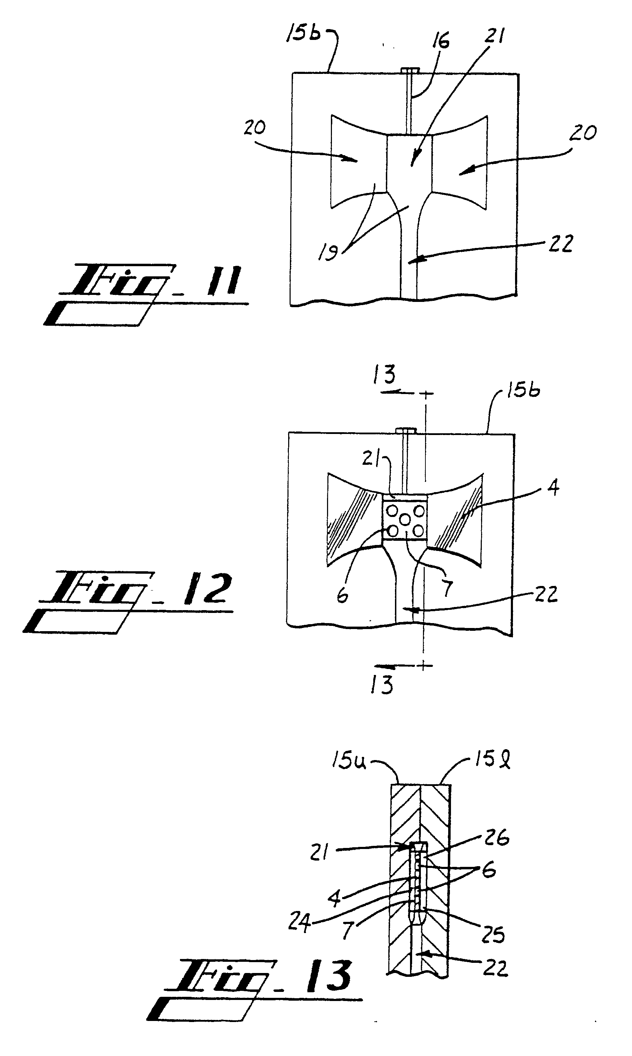

As set forth in the foregoing objectives of the invention, it will be appreciated by those skilled in the art that one of the difficulties in construction of various implements has traditionally been the attachment of the implement head to a strong and durable implement handle. As shown in Figs. 1 through 13, the various embodiments of the present invention all embody an injection molded thermoplastic handle. The material chosen for the injection molded thermoplastic handle may be one of a variety of thermoplastic materials currently available on the market. The choice of the thermoplastic to be used as the material for the implement handle for any particular implement should be selected with a view toward the flexibility, rigidity, strength, hardness and other qualities which are required in the particular application for which the thermoplastic material is to be used.

As used in the preferred embodiments disclosed herein, it has been found that an injection molded grade of nylon thermoplastic material, such as DuPont FE 8018-14 glass, DuPont Zytel brand, or another comparable brand produces desirable results in the hand held implements disclosed herein. Additionally, rubber and other additives may be added to the foregoing compound if the copolymers do not provide adequate flexibility. Further, in order to add mass and reduce shrinkage, glass, foam, talc or carbon fillers may be added, if desired. Also, a polyethylene shield may also be injection molded over all or part of the handle to further reduce the likelihood of breakage or damage to the product.

In addition to the selection of a strong and durable thermoplastic for use in the implement handle, the implement also may be reinforced as shown in Fig. 6. As shown in Fig. 6, the double-edged axe head 4 (or other implement head) may be reinforced by a metal rod 5 which is welded to the axe head and which extends longitudinally in the direction of the length of the axe handle 10b to provide further reinforcement for the thermoplastic material.

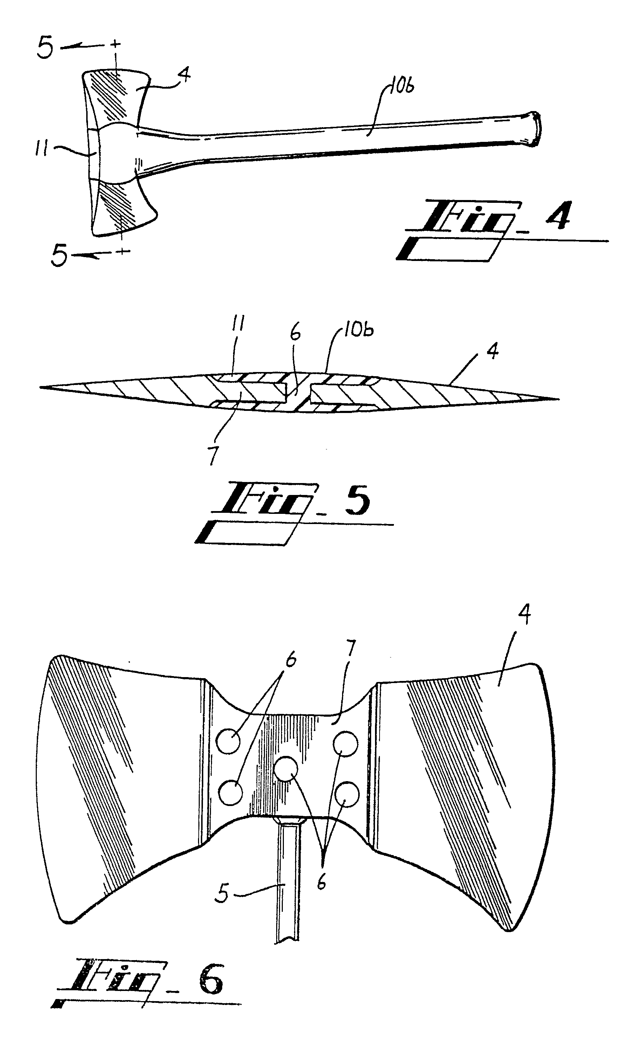

Various views of a preferred embodiment of the present invention as applied to a single-edged axe are shown in Figs. 1 through 3. As shown in Fig. 3, the single-bladed axe head 2 is adapted by drilling holes 3 through the web portion 3 of the axe head around and through which the injection molded thermoplastic material will be introduced in the injection molding process as shown in Fig. 2. As shown in Fig. 1, the single-bladed axe is manufactured by placing the axe head 2 in the mold in which the axe handle 10a is to be formed and allowing the heated thermoplastic material to be injected into the mold under pressure in order to cause the thermoplastic material to surround the web portion 7 of the axe head 2 and to pass through the holes 3 in the adapted axe head 2 in order to form a unitary integral mass or bond joining the adapted axe head 2 to the injection molded handle 10. The mass of thermoplastic material molded around the web portion 7 of the head forms a unitary head locking handle portion 11 of the handle 10.

As shown in Figs. 4 through 6, a preferred embodiment of a double-edged axe also may be manufactured according to the present invention. In the same manner in which the single-edged axe was manufactured, the double-edge axe head 4 is placed in the mold in which the axe handle 10b, is to be formed in a cavity which is shaped to receive the entire implement working head. A mold 15 particularly constructed for the double-edge axe is more particularly shown in Figs. 21, 22, and 23. The cavity 19 includes a first portion 20 sized and shaped to fit tightly about the working surfaces of the tool head so as to exclude mold material and prevent coverage of the working surfaces of the tool by the thermoplastic in the injection molding process. The cavity 19 further includes a second portion 21 which receives the web portion 7 of the working head 4 and which is sized larger than the web portion 7 so that the thermoplastic handle material flows completely around the web portion of the head and through the holes 6, to enclose and encapsulate the web portion to form a unitary implement head locking handle portion 11 together with the handle 10.

Heated thermoplastic material then is introduced into the mold 15 under pressure and allowed to pass through the holes 6 in that portion of the axe head 4 which is surrounded by the axe handle 10. In this manner the interface between the adapted double-edged axe head 4 and the thermoplastic material forms a bond joining the adapted double-edged axe head 4 to the axe handle 10.

Additionally, as shown in Fig. 6 and as discussed more fully above, a metallic rod 5 may be welded to the double-edged axe head 4 (or other implement head) in order to provide additional strength to the handle 10.

Generally speaking, the improved implements of the present invention include unitary implement working heads having a working surface portion and a handle attaching or web portion. For implements such as double headed axes, mauls, and sledges (Figs. 1-10) there is preferably provided an intermediate handle attaching web portion 7 positioned between a pair of opposed working end portions or surfaces of the tool or implement head. The completed injection molded thermoplastic handle generally comprises a working head attaching portion 11 and an elongate handle portion 10 for grasping. The working head attaching portion 11 and handle portion 10 are integrally formed in the mold. The working head attaching portion 11 of the handle is molded around substantially all of the web portion 7 of the implement head so as to lock the head to the handle.

The single edge axe of Figs. 1, 2, and 3 is considered a double headed tool because it consists of the blade 30, hammer portion 31 and intermediate web portion 7. In general, for two-ended tools the width and thickness of the web portion 7 is less than the width and thickness of the adjacent opposed end portions such as the hammer 31 and blade 30, to define together with the end portions a peripheral groove extending completely about the tool head. As best seen in Fig. 3, the width of the web portion 7 is less than the width of the blade 30 or of the hammer 31, so as to allow the thermoplastic material to flow around the web portion 7. As best seen in Fig. 2, the thickness of the web portion 7 is less than the thickness of the blade 30 or of the hammer 31, again to allow the thermoplastic material to flow around the web portion 7, through the holes 3, to provide a smooth coextensive surface of the unitary head locking portion 11 which extends between the blade 30 and the hammer 31 across both the width and the thickness of the head locking portion 11

Advantageously, the coextensive surface of the head locking portion 11 with the outer surface of the blade 30 and the hammer 31 provides an esthetically pleasing appearance, and presents a smooth outer surface between the handle and the working head to minimize the likelihood of damage to the junction between the handle and the working head by virtue of water seepage, snagging during use, or protruding surfaces which might be stricken during use.

The double-edged axe of Fig. 4, 5, and 6, the sledge hammer of Figs. 7 and 8, and the maul of Figs. 9 and 10 are other examples of improved implements comprising a unitary implement working head having a pair of opposed working surface portions joined by an intermediate web portion 7 positioned between the opposed end portions, and wherein the thickness and width of the web is less than the respective thickness and width of the adjacent end portions defining a peripheral groove extending completely about the head. When completed, these implements as well have coextensive surfaces between the working head attaching portion 11 of the handle with the working surfaces of the implement head.

Turning now to Fig. 11, the preferred mold for making improved implements such as the sledge, axe, and maul will now be described. Fig. 11 shows a lower mold half 15b which receives the entire working head and allows the web portion of the working head to be encapsulated. Preferably, the mold 15 includes a first cavity portion 20 sized and shaped to receive and fit tightly about the working surfaces of the implement working head to exclude mold material from the working head. A second cavity portion 21 is also provided and is sized to receive the web portion of the working head but is larger in volume than the web to allow thermoplastic material injected into the mold 15 through an injection inlet 16 to flow around and encapsulate the web.

As illustrated in Fig. 12 and using the double-edged axe head 4 as an example, the axe head 4 is placed into the mold 15. The upper mold half 15u is then fitted to the lower mold half 15l, and heated thermoplastic material is injected into the second cavity portion 21 of the mold to form a handle by filling the second cavity portion 21 and a handle cavity 22 which is in communication with the second cavity portion 21. Since the opposed end portions of the axe head together with the web define a peripheral groove extending completely around the head, the mold material completely fills the peripheral groove to form the head locking handle portion 11.

As illustrated in Fig. 1, the web portion 7 of the implement head such as the axe head 4 divides the second cavity portion 21 into a first side mold cavity 24, a second side mold cavity 25, and a top cavity portion 26. The first and second side mold cavities are positioned adjacent to opposite sides of the web portion 7 of the implement head. Because of the holes 6 in the implement working head, the heated thermoplastic material fills the first and second side mold cavities 24, 25, the top cavity portion 26, flows through the holes 6, and forms the rigid unitary implement head locking portion 11 which encapsulates and locks the web portion 7 of the implement working head to the handle 10 of the tool formed in the handle cavity 22.

Although not specifically illustrated, it is to be understood that the web portion 7 of the working head can include raised surfaces, to further lock the working head to the handle. Moreover, it should be understood that the web portion of the working head may include a recess or cavity not extending completely through the thickness of the web for receiving heated thermoplastic material to further lock the working head to the handle.

It should also be understood that it is preferred for a portion of the first cavity portion 20 of the mold, which closely receives the working surfaces of the tool, to be coterminous or coextensive with a portion of the second cavity portion 21, which receives the web portion 7 of the tool head, so that the working surfaces of the finished implement are coextensive with the thermoplastic material injected into the second cavity portion of the mold, to provide a smooth, pleasing outer surface on the implement head locking handle portion 11.

In addition to the preferred embodiments set forth herein, it will be understood that the present invention may be embodied in axes, brooms, cutting blades, picks, hammers, rakes and shovels and other implements.

The methods of forging, casting or stamping the implement heads and manufacturing the necessary molds for use in the injection molding process are well known in the art and will not be described in detail herein. Additionally, the temperatures and pressures under which the thermoplastic material is introduced into the mold in the injection molding process will depend on the properties of the thermoplastic material used and such details also will be known to those skilled in the art and will not be discussed herein.

From the foregoing description of preferred embodiments of the present invention, it may be seen that the present invention provides an implement having an injected molded handle and a strong and durable bond between the implement head and the injection molded handle. It will therefore be understood that the embodiments of the present invention described above are merely illustrative, and that the present invention is limited solely by the appended claims.

## Claims

1. An implement comprising a unitary working head and a unitary thermoplastic handle (10) permanently joined together, said working head including a first working portion (2), a second working portion (31), and a web portion (7) between said first and second working portions (2, 31) having a width and a thickness which are at some portion along said web (7) less than a width and thickness of at least one of said first and second working portions (2, 31), and
   **characterized through**
   a.) a plurality of apertures (3) extending transversely through said web portion (7),
   b.) an injection molded handle (10), and
   c.) an attaching portion (11) molded around substantially all of said web portion (7) and extending through said plurality of apertures (3) of said web portion (7) to join thermoplastic material of said handle (10) which is on opposite sides of said web portion (7).

2. An implement according to claim 1, characterized in that said web (7) is of the same width as said first working portion where said web joins said first working portion and said web (7) is of the same width as said second working portion where said web joins said second working portion.

3. An implement according to claim 1, characterized in that along a centerline of a length of said web (7) the width of said web (7) is less than the width of at least one of said first and second working portions (2, 31; 4).

4. An implement according to claim 1, characterized in that both of said first and second working portions (2, 31; 4) of said working head have surfaces which are coextensive with outer surfaces of said attaching portion (11) of said handle (10).

5. An implement according to claim 1, characterized in that said web portion has at least three apertures (3) extending transversely through said web portion (7).

## Revendications

1. Ustensile comprenant une tête de travail unitaire et un manche (10) thermoplastique unitaire unis de façon permanente, ladite tête de travail comprenant une première partie de travail (2), une seconde partie de travail (31) et une partie âme (7), entre lesdites première et seconde parties de travail (2,31), ayant une largeur et une épaisseur qui sont dans une partie le long de l'âme (7) inférieures à la largeur et l'épaisseur d'au moins une desdites première et seconde parties de travail (2,31) et
   caractérisé par
   a) une pluralité d'ouvertures (3) s'étendant transversalement à travers ladite partie âme (7),
   b) un manche moulé par injection (10), et
   c) une partie de fixation (11) moulée substantiellement autour de toute la partie âme (7) et s'étendant à travers ladite pluralité d'ouvertures (3) de ladite partie âme (7) pour unir la matière thermoplastique dudit manche (10) qui se trouve sur les côtés opposés de ladite partie âme (7).

2. Ustensile selon la revendication 1, caractérisé en ce que ladite partie âme (7) a la même largeur que ladite première partie de travail à l'endroit où ladite âme est unie à ladite première partie de travail et que ladite âme (7) est de la même largeur que ladite seconde partie de travail à l'endroit où ladite âme est unie à ladite seconde partie de travail.

3. Ustensile selon la revendication 1, caractérisé en ce que la largeur de ladite âme (7) le long d'une ligne centrale de la longueur de ladite âme (7) est inférieure à la largeur d'au moins une desdites première et seconde parties de travail (2,31;4).

4. Ustensile selon la revendication 1, caractérisé en ce que les deux des première et seconde parties de travail (2,31;4) de ladite tête de travail ont des surfaces qui s'étendent dans le prolongement des surfaces extérieures de ladite partie de fixation (11) dudit manche (10).

5. Ustensile selon la revendication 1, caractérisé en ce que ladite partie âme comprend au moins trois ouvertures (3) s'étendant transversalement à travers ladite partie âme (7).

## Patentansprüche

1. Werkzeug mit einem einheitlichen Arbeitskopf und einem dauerhaft mit diesem verbundenen einheitlichen thermoplastischen Handgriff (10), wobei der Arbeitskopf einen ersten Arbeitsabschnitt (2) einen zweiten Arbeitsabschnitt (31) und einen Stegabschnitt (7) zwischen den ersten und zweiten Arbeitsabschnitten (2, 31) einschließt, der eine Breite und Stärke aufweist, die an einem bestimmten Abschnitt des Stegs (7) geringer sind als eine Breite und Stärke von zumindest einem der ersten und zweiten Arbeitsabschnitte (2, 31), **gekennzeichnet durch**

a.) eine Mehrzahl von Öffnungen (3), die sich quer durch den Stegabschnitt (7) erstrecken,

b.) einen spritzgußgeformten Handgriff (10), und

c.) einen Verbindungsabschnitt (11), der um im wesentlichen dem gesamten Stegabschnitt (7) gußgeformt ist und sich durch die Mehrzahl der Öffnungen (3) des Stegabschnitts (7) erstreckt, um thermoplastisches Material des Handgriffs (10) zu verbinden, das auf gegenüberliegenden Seiten des Stegabschnitts vorhanden ist.

2. Werkzeug nach Anspruch 1, dadurch gekennzeichnet, daß der Steg (7) dort dieselbe Breite wie der erste Arbeitsabschnitt aufweist, wo der Steg auf den ersten Arbeitsabschnitt trifft und der Steg (7) dort dieselbe Breite wie der zweite Arbeitsabschnitt aufweist, wo der Steg auf den zweiten Arbeitsabschnitt trifft.

3. Werkzeug nach Anspruch 1, dadurch gekennzeichnet, daß die Breite des Stegs (7) entlang einer Mittelachse einer Längserstreckung des Steges geringer ist als die Breite von zumindest einem der ersten und zweiten Arbeitsabschnitte (2, 31; 4).

4. Werkzeug nach Anspruch 1, dadurch gekennzeichnet, daß die ersten und zweiten Arbeitsabschnitte (2, 31; 4) des Arbeitskopfes beide Oberflächen aufweisen, die sich gemeinsam mit Außenflächen des Verbindungsabschnitts (11) des Handgriffes (10) erstrecken.

5. Werkzeug nach Anspruch 1, dadurch gekennzeichnet, daß der Stegabschnitt wenigstens drei sich quer durch den Stegabschnitt (7) erstreckende Öffnungen (3) aufweist.

EP 0 127 780 B1

_Fig_ 1

_Fig_ 2

_Fig_ 3

8

**Fig. 4**

**Fig. 5**

**Fig. 6**

_Fig_ 7

_Fig_ 8

_Fig_ 9

_Fig_ 10

_Fig_ 11

_Fig_ 12

_Fig_ 13